Europäisches Patentamt

European Patent Office

Office européen des brevets

(11) Veröffentlichungsnummer: **0 567 765 A2**

# EUROPÄISCHE PATENTANMELDUNG

(21) Anmeldenummer: **93104476.2**

(22) Anmeldetag: **18.03.93**

(51) Int. Cl.5: **G05B 19/18**

(30) Priorität: **30.04.92 DE 4214379**

(43) Veröffentlichungstag der Anmeldung:
**03.11.93 Patentblatt 93/44**

(84) Benannte Vertragsstaaten:
**DE FR IT NL SE**

(71) Anmelder: **SIEMENS AKTIENGESELLSCHAFT**
**Wittelsbacherplatz 2**
**D-80312 München(DE)**

(72) Erfinder: **Storjohann, Kai, Dr., Dipl.-Ing.**
**Aidenbachstrasse 176**
**W-8000 München 71(DE)**
Erfinder: **Weil, Hans-Georg, Dipl.-Ing.**
**Wangenerstrasse 64**
**W-8130 Starnberg(DE)**

(54) **Verfahren zum Optimieren der Postioniergenauigkeit von Roboterarmen.**

(57) In industriellen Fertigungsprozessen werden häufig Industrieroboter mit Knickarmen eingesetzt. Der Steuerung dieser Knickarmroboter liegen kinematischer Modelle dieser Roboter zugrunde. Die Erfindung beschreibt ein Verfahren, mit dem die Positioniergenauigkeit solcher Knickarmroboter verbessert werden kann, indem temperaturabhängige Längenausdehnungen über die Materialeigenschaften des eingesetzten Materials bei Knickarmrobotern ermittelt werden. Dazu werden

   a) die Temperaturen an den entsprechenden Knickarmrobotersegmenten bestimmt,

   b) die zugehörigen Längenänderungen ermittelt und

   d) diese Längenänderungen benutzt, um das kinematische Modell des Knickarmroboters zu korrigieren.

   So können Knickarmroboter auch für Tätigkeiten herangezogen werden, an die hohe Genauigkeitsanforderungen gestellt werden, für die sie bislang nicht geeignet waren. sign.

## FIG 2

EP 0 567 765 A2

EP 0 567 765 A2

Industrieroboter gewinnen in der Fertigung aufgrund ihrer Flexibilität und wachsender Leistungsfähigkeit zunehmend an Bedeutung. Dies liegt insbesondere daran, daß bei gefallenen Preisen die mechanische Leistung und die Positioniergenauigkeit erheblich verbessert werden konnte. Letzteres Leistungsmerkmal ist entscheidend dafür, ob ein Roboter für Aufgaben tauglich ist, bei denen das genaue Positionieren (wie z.B. beim Bohren) oder das exakte Abfahren einer Trajektorie (wie z.B. beim Laserschneiden) entscheidend ist.

Eine Verbesserung der Positioniergenaugkeit würde z.B. preisgünstigen Knickarmrobotern Aufgabengebiete erschliessen können, die heutzutage ausschließlich teuren Linearrobotern vorbehalten sind. Dies gilt z.B. für die genaue Materialbearbeitung mit Lasern, d.h. für das Schneiden und das Schweißen von Metallen.

Beim Blechschneiden oder Entgraten z.B. muß die Fokussierungseinrichtung eines Lasers in definierter Höhe mit konstanter Geschwindigkeit einer geplanten Trajektorie nachgeführt werden. Die diesbezügliche Genaugkeitsanforderung, d.h. die maximal zulässige zeitliche und räumliche Abweichung der Fokussieroptik von der geplanten Trajektorie, liegt im Bereich von 1/10mm. Diese Genauigkeitsanforderung liegt knapp unterhalb der derzeitig erreichbaren Positioniergenauigkeit von Knickarmrobotern.

Als Gründe für die Limitierung Positioniergenauigkeit sind verschiedene Fehlerquellen denkbar:
- lastabhängige statische und dynamische Deformationen
- ungenaue, bzw. fehlerhafte statische und dynamische Modelle regeltechnische Limitationen (z.B.Stellgrößenbeschränkung)
- Getriebefehler (z.B. Lose)
- Lagerfehler (z.B. Spiel)
- Positionierfehler der Servomotoren.

Die Aufgabe, die dieser Erfindung zugrundeliegt, besteht darin, ein Verfahren anzugeben, mit dem die Positioniergenauigkeit von Roboterarmen weiter verbessert werden kann. Diese Aufgabe wird gemäß den Merkmalen des Patentanspruchs 1 gelöst.

Temperaturauswirkungen auf die Positioniergenauigkeit von Roboterarmen werden derzeit nicht berücksichtigt.

Ein besonderer Vorteil des erfindungsgemäßen Verfahrens besteht darin, daß preisgünstige Roboter für Aufgaben verwendet werden können, an die hohe Genauigkeitsanforderungen gestellt werden.

Besonders günstig ist es, daß mit dem erfindungsgemäßen Verfahren die Positioniergenauigkeit von Knickarmrobotern verbessert werden kann.

Ein weiterer Vorteil des erfindungsgemäßen Verfahrens besteht darin, daß durch die ermittelte Längenänderung, die auf Temperatureinwirkung beruht, über Koordinatentransformation direkt neue Stellwinkel für die Servomotoren des jeweiligen Roboterarmsegmentes ermittelt werden können und keine Änderung an der Steuerung des Roboterarms erforderlich ist. Andere Weiterbildungen der Erfindung ergeben sich aus den Unteransprüchen.

Die Erfindung wird im folgenden anhand eines Knickarmroboters mit zwei Segmenten weiter erläutert. Das Verfahren kann ohne Einschränkung auf Roboter mit beliebiger Segmentzahl übertragen werden.

In Figur 1 ist zur Erläuterung das Modell eines Knickarmroboters mit zugehöriger Robotersteuerung dargestellt, bei dem zur Ermittlung der Stellwinkel phi1 und phi2 die Temperatur nicht berücksichtigt wird.

In Figur 2 ist zur Erläuterung das kinematische Modell eines Knickarmroboters dargestellt zusammen mit zugehöriger Robotersteuerung, bei dem die unterschiedlichen Temperaturen an den einzelnen Roboterarmsegmenten für die Ermittlung der Stellwinkel phi1 und phi2 Verwendung finden.

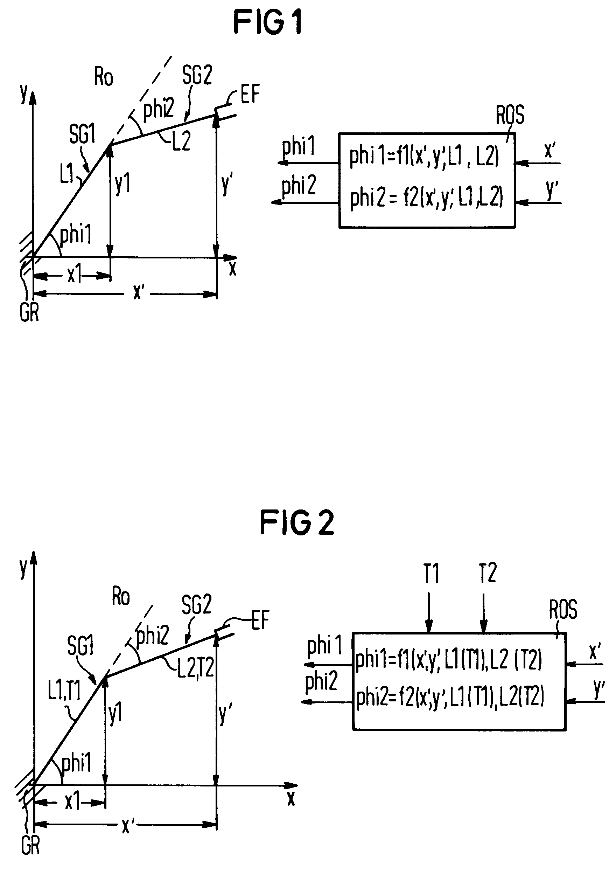

In Figur 1 ist schematisiert das kinematische Modell eines Knickarmroboters Ro mit zugehöriger Robotersteuerung ROS dargestellt.

Das Modell des Knickarmroboters Ro besteht aus zwei Armsegmenten SG1, SG2, mit den Längen L1 und L2. Am Ende des zweiten Armsegmentes SG2 mit L2 befindet sich ein Effektor EF. Das Armsegment SG1 mit Länge L1 ist gelenkig mit einem Untergrund GR verbunden. Zwischen dem Untergrund und dem Segment SG1 mit Länge L1 wird der Stellwinkel phi1 und den zwischen den Segmenten SG1, SG2 mit Länge L1 und L2 der Stellwinkel phi2 eingestellt, um eine Effektorposition x'y'zu erreichen. Die Weltkoordinaten des Endes des ersten Armsegmentes werden im folgenden mit x1,y1 bezeichnet. Weiterhin ist dargestellt das Koordinatensystem xy, in dem die Größen x' und y' bestimmt werden.

Zur Ansteuerung eines Koordinatenpunkts x'y' mit dem Effektor EF, der am Ende des zweiten Segmentes SG2 mit der Länge L2 angebracht ist, sind folgende Schritte notwendig: Der Robotersteuerung ROS werden x' und y' vorgegeben. Sie ermittelt phi1 als eine Funktion f1 in Abhängigkeit von x'y', L1 und L2 und phi2 als eine Funktion f2, in Abhängigkeit von x'y', L1 und L2.

$$x1^2 + y1^2 = L1^2,$$
$$(x1-x')^2 + (y1-y')^2 = L2^2$$

2

Mit den Abkürzungen

$$a = \frac{L1^2 - L2^2 + x'^2 y'^2}{2x'}$$

und $b = \frac{y'}{x'}$

folgt als Lösung für x1 und y1

$$y1_{1/2} = \frac{a\,b}{b+1} \pm \frac{\sqrt{L1^2(b^2+1)-a^2}}{b^2+1}$$

und

$$x1_{1/2} = a - by1_{1/2}$$

Damit lassen sich die Winkel phi1 und phi2 wie folgt bestimmen:

phi1 = f1 = atan2(y1, x1) ,
phi2 = f2 = atan2(y'-y1,x-x1) - atan2(y1,x1).

Diese Winkel phi1 und phi2 werden den entsprechenden Servomotoren vorgegeben, die die Armsegmente in eine entsprechende Position bringen. Vom Effektor sollte dann genau die Position x'y' eingenommen werden.

Bei diesem Positionsierungsvorgang bleibt die Temperatur unberücksichtigt. Es wird angenommen, daß über den gesamten Roboterknickarm eine homogene Temperaturverteilung mit der Temperatur T, von beispielsweise 20°C vorliegt. Diese Temperatur gilt als Referenztemperatur.

In Figur 2 ist das kinematische Modell eines Knickarmroboters dargestellt mit zugehöriger Robotersteuerung. Die Bezeichungen in Figur 2 werden in analoger Weise zu Figur 1 verwendet. Im Unterschied zu Figur 1 werden nun an den einzelnen Armsegmenten des Knickarmroboters noch die Temperaturen T1 und T2 ermittelt. Dem kinematischen Modell des Knickarmroboters liegen auch hier wie in Figur 1 dieselben Längen L1 und L2 der jeweiligen Armsegmente zugrunde, die bei der Referenztemperatur T ermittelt wurden. Um eine entsprechende Position x' und y' im Koordinatensystem xy mit dem Effektor zu erreichen, der am Ende des Armsegmentes SG2 angebracht ist, müssen folgende Schritte durchgeführt werden. Der Robotersteuerung werden die Koordinaten x'und y' zugeführt. Weiterhin werden ihr die Temperaturen T1 und T2 an den jeweiligen Roboterarmsegmenten mitgeteilt.

Die Robotersteuerung ermittelt nun die Winkel phi1 und phi2 als Funktion f1 und f2 in Abhängigkeit von x'y' und den realen Längen von SG1 und SG2 und steuert mit dem Effektor die entsprechende Koordinate im xy-System an.

$$x1^2 + y1^2 = L1'^2,$$
$$(x1-x')^2 + (y1-y')^2 = L2'^2.$$

Mit den Abkürzungen

$$a = \frac{L1'^2 - L2'^2 + x'^2 + y'^2}{2x'}$$

und $b = \frac{y'}{x'}$
folgt als Lösung für x1 und y1

$$y1_{1/2} = \frac{ab}{b+1} \pm \left( \sqrt{L1'^2(b^2+1)-a^2} ; b^2+1 \right)$$

und

$$x1_{1/2} = a - b \, y1_{1/2}$$

Damit lassen sich die Winkel phi1 und phi2 wie folgt bestimmen:

phi1 = f1 = atan2(y1, x1),
phi2 = f2 = atan2(y'-y1, x'-x1) - atan2(y1,x1).

Diese Winkel phi1 und phi2 werden den entsprechenden Servomotoren vorgegeben, die die Armsegmente in eine entsprechende Position bringen. Vom Effektor wird dann, unabhängig von der Temperatur der Segmente die Position x', y' eingenommen werden.

Um einen Eindruck über die Größenordnung des Temperatureinflusses zu geben wird im folgenden der gestreckte Roboterarm (phi2 = 0) betrachtet. Die Segmente haben die Länge L1 = L2 = 1m und seien aus Eisen. Die Temperaturänderung T1 -T und T2 -T betrage jeweils 10K. Entsprechend der Ausdehnungskoeffizient $\mu$ ergibt sich die Gesamtlänge zu:

$$L' = L1' + L2' = \mu (L1 + L2)(T1 - T) = 2m \cdot 12,1 \cdot 10\text{-}6/K$$

Diese Längenänderung befindet sich immerhin schon im Bereich der geforderten 1/10mm Positioniergenauigkeit. Und man sieht, daß man durch eine Temperaturkompensation eine höhere Positioniergenauigkeit im 1/10mm Bereich erzielen kann.

Die Temperaturabhängigen Ausdehnungskoeffizienten der üblicherweise bei Roboterarmen eingesetzten Metalle sind in der Regel noch größer als die Eisen.

**Patentansprüche**

1. Verfahren zum Optimieren der Positionsgenauigkeit eines Roboterarmes bei dem
   a) am Roboterarm die aktuelle Temperatur ermittelt wird,
   b) der Roboterarm von einer Robotersteuerung ROS in Abhängigkeit von Koordinatenvorgaben (x',y') eingestellt wird, c) die Differenz zwischen der aktuellen Temperatur und einer Referenztemperatur (T) gebildet wird,
   d) die sich in Abhängigkeit dieser Temperaturdifferenz und den Materialeigenschaften des jeweiligen Roboterarm ergebende Längenänderung des Roboterarms bestimmt wird,
   e) das der Robotersteuerung (ROS) zugrundeliegende, bei der Referenztemperatur gültige kinematische Modell (Ro) des Roboterarms den aktuellen Verhältnissen angepaßt wird, indem die für die aktuelle Temperatur gültigen Geometriedaten des jeweiligen Roboterarmsegments
   Verwendung finden. f) die Robotersteuerung den Roboterarm in Abhängigkeit der um die Längenänderung korrigierten Koordinatenvorgaben einstellt.

2. Verfahren nach Anspruch 1, bei dem der Roboterarm ein mehrere Segmente aufweisender Knickarm ist.

3. Verfahren nach einem der Ansprüche 1 bis 2, bei dem aus der temperaturbedingten Längenänderung der Segmente neue Stellwinkel (phi1, phi2) für die jeweiligen Roboterarmsegmente ermittelt werden.

## FIG 1

## FIG 2